# EUROPEAN PATENT APPLICATION

(11) **EP 4 765 393 A1**
(43) Date of publication of application: **24.06.2026**
(21) Application number: 23950117.4
(22) Date of filing: 30.08.2023
(51) Int. Cl.: H01M 50/24, H01M 10/613

(54) **CASE, BATTERY, ELECTRIC DEVICE, AND METHOD FOR ASSEMBLING CASE**

(71) Applicant: Contemporary Amperex Technology Co., Limited, Ningde, Fujian 352100 (CN)
(72) Inventor: ZHAO, Pengbo, Ningde, Fujian 352100 (CN); WANG, Baojie, Ningde, Fujian 352100 (CN); WANG, Yong, Ningde, Fujian 352100 (CN); WANG, Qing, Ningde, Fujian 352100 (CN); ZHANG, Wei, Ningde, Fujian 352100 (CN)
(74) Representative: Gong, Jinping
(86) International application number: PCT/CN2023/115724
(87) International publication number: WO 2025/043526

(57) **Abstract**

Provided are a case, a battery, an electric device and a method for assembling a case. The case comprises a frame (20) and an end plate (10) connected to the frame (20), wherein the end plate (10) comprises a first connecting portion (11) and a second connecting portion (21) both facing the frame (20); a circumferential edge of the first connecting portion (11) and a circumferential edge of the second connecting portion (21) are both connected to the frame (20); and the whole circumferential edge of at least one of the first connecting portion (11) and the second connecting portion (21) is continuously in sealed connection with the frame (20). The end plate (10) and the frame (20) are connected in a dual-connection fastening method in which the first connecting portion (11) and the second connecting portion (21) are configured to respectively connect to the frame, such that the case has a simple structure, is convenient to assemble, and has a high assembly efficiency, a low cost and good reliability.

## Description

### TECHNICAL FIELD

The present application relates to the technical field of batteries, and in particular, to a case, a battery, an electric device, and an assembly method for a case.

### BACKGROUND

In some related technologies, a battery includes a case and a battery cell. The battery cell is disposed in the case. The case is associated with issues such as a large number of components and structural complexity.

### SUMMARY

Some embodiments of the present application provide a case, a battery, an electric device, and an assembly method for a case, for alleviating the complexity of case structures.

Some embodiments of the present application further provide a case. The case includes frames and an end plate connected to the frames, where the end plate includes a first connecting portion and a second connecting portion both facing the frame; a circumferential edge of the first connecting portion and a circumferential edge of the second connecting portion are both connected to the frame; and an entire circumferential edge of at least one of the first connecting portion and the second connecting portion is connected to the frame in a continuous and sealing manner.

In the above embodiments, the entire circumferential edge of at least one of the first connecting portion and the second connecting portion is connected to the frame in a continuous and sealing manner to achieve sealing at the joint between the end plate and the frame. The structure is simple, enabling convenient mounting, high assembly efficiency, low cost, and excellent reliability.

In some embodiments, the first connecting portion and the second connecting portion are not on the same plane.

In the above embodiments, the first connecting portion and the second connecting portion are not on the same plane. When one of the first connecting portion and the second connecting portion is connected, the other of the first connecting portion and the second connecting portion is not affected.

In some embodiments, the first connecting portion is positioned closer to an internal space of the case than the second connecting portion.

In the above embodiments, the first connecting portion is positioned closer to the internal space of the case than the second connecting portion. When one of the first connecting portion and the second connecting portion is connected, the other of the first connecting portion and the second connecting portion is not affected.

In some embodiments, the entire circumferential edge of the first connecting portion is connected to the frame in a continuous and sealing manner, and the circumferential edge of the second connecting portion is connected to the frame via at least two connecting members.

In the above embodiments, the entire circumferential edge of the first connecting portion is connected to the frame in a continuous and sealing manner to achieve sealing at the joint between the end plate and the frame, and the circumferential edge of the second connecting portion is connected to the frame via at least two connecting members to enhance the connection strength between the end plate and the frame. The end plate has fewer components and a simple structure, and the connection operation between the end plate and the frame is convenient, with low cost and high reliability.

In some embodiments, the entire circumferential edge of at least one of the first connecting portion and the second connecting portion is connected to the frame in a continuous and sealing manner by friction stir welding.

In the above embodiments, the friction stir welding is used to form a continuous and sealed connection, which is convenient to operate, facilitates mechanization and automation, and requires simple equipment, with low cost.

In some embodiments, the entire circumferential edge of one of the first connecting portion and the second connecting portion is connected to the frame in a continuous and sealing manner, and the circumferential edge of the other connecting portion is connected to the frame via at least two connecting members.

In the above embodiments, the entire circumferential edge of one of the first connecting portion and the second connecting portion is connected to the frame in a continuous and sealing manner to achieve sealing at the joint between the end plate and the frame, and the circumferential edge of the other of the first connecting portion and the second connecting portion is connected to the frame via at least two connecting members to enhance the connection strength between the end plate and the frame. The end plate has fewer components and a simple structure, and the connection operation between the end plate and the frame is convenient, with low cost and high reliability.

In some embodiments, the connecting member includes a hot-melt self-tapping screw.

In the above embodiments, the connection to the frame is implemented using at least two hot-melt self-tapping screws, thereby eliminating the need for pre-drilling and enabling convenient operation at a low cost.

In some embodiments, the end plate includes a first plate and a second plate stacked in a first direction; the first connecting portion is disposed on the first plate, and the second connecting portion is disposed on the second plate.

In the above embodiments, the entire circumferential edge of at least one of the first connecting portion and the second connecting portion is connected to the frame in a continuous and sealing manner to achieve sealing at the joint between the end plate and the frame. The end plate has fewer components and a simple structure, and the connection operation between the end plate and the frame is convenient, with low cost and high reliability.

In some embodiments, the end plate further includes an intermediate member disposed between the first plate and the second plate, and the intermediate member connects the first plate and the second plate, such that a spacing is formed between the first plate and the second plate.

In the above embodiments, the intermediate member is disposed between the first plate and the second plate, such that a spacing is formed between the first plate and the second plate due to the presence of the intermediate member, thereby providing a buffering effect for the end plate and enhancing the impact resistance of the end plate.

In some embodiments, the intermediate member is configured as a honeycomb structure.

In the above embodiments, the honeycomb-structured intermediate member is disposed between the first plate and the second plate, thereby providing a relatively good buffering effect for the end plate and enhancing the impact resistance of the end plate.

In some embodiments, the intermediate member forms at least one flow channel between the first plate and the second plate, and an extending direction of the flow channel intersects the first direction.

In the above embodiments, the intermediate member forms at least one flow channel between the first plate and the second plate, such that a cooling liquid can be delivered through the flow channel to reduce the temperature of the end plate and other components abutting against the end plate. Additionally, the intermediate member can provide a buffering effect, thereby enhancing the impact resistance of the end plate.

In some embodiments, the intermediate member includes a first component and a second component, the first component is configured as a honeycomb structure, and the second component forms at least one flow channel between the first component and the first plate or the second plate; an extending direction of the flow channel intersects the first direction.

In the above embodiments, the intermediate member includes a first component and a second component. The first component is configured as a honeycomb structure, thereby providing a buffering effect and enhancing the impact resistance of the end plate. The second component forms at least one flow channel between the first plate and the second plate, such that a cooling liquid can be delivered through the flow channel to reduce the temperature of the end plate and other components abutting against the end plate. Additionally, the second component can provide a buffering effect, thereby enhancing the impact resistance of the end plate.

In some embodiments, a projection range of the second connecting portion in the first direction covers and exceeds a projection range of the first connecting portion in the first direction; and the frame is disposed on a side of the second plate adjacent to the first plate, and the frame is disposed around a circumferential outer edge of the first plate.

In the above embodiments, the frame is disposed on a side of the second plate adjacent to the first plate, the second plate covers the frame, the frame is disposed around the circumferential outer edge of the first plate, and the projection range of the second connecting portion in the first direction covers and exceeds the projection range of the first connecting portion in the first direction, so as to form a continuous and sealed connection between the first connecting portion at the circumferential edge of the first plate and the frame. Therefore, a sealed connection between the frame and the end plate can be achieved, thereby sealing the cavity enclosed by the frame at the end plate. The at least two connecting members disposed at intervals along the circumferential edge of the second plate are connected to the frame to enhance the connection strength between the end plate and the frame.

In some embodiments, the projection range of the first connecting portion in the first direction covers and exceeds a projection range of the intermediate member in the first direction; and the frame includes a first extension portion extending between the first plate and the second plate, and the first extension portion is connected to the first connecting portion in a continuous and sealing manner.

In the above embodiments, the projection range of the first connecting portion in the first direction covers and exceeds the projection range of the intermediate member in the first direction, so as to allow the first plate, the intermediate member, and the second plate to be assembled first, and then the first extension portion of the frame to be inserted between the first plate and the second plate, such that the first plate and the frame are connected in a continuous and sealing manner from the side of the first plate facing away from the second plate. The first extension portion is configured to connect the frame to the end plate, and can also provide support for the welding of the first plate.

In some embodiments, a side of the first extension portion facing away from the second plate is connected to the first connecting portion in a continuous and sealing manner.

In the above embodiments, the first extension portion of the frame is inserted between the first plate and the second plate, and the side of the first extension portion facing away from the second plate abuts against the first connecting portion to form a continuous and sealed connection, thereby achieving a continuous and sealed connection between the first plate and the frame.

In some embodiments, the frame further includes a first limiting portion, the first limiting portion is disposed on the side of the first extension portion facing away from the second plate, and the first limiting portion abuts against the circumferential outer edge of the first plate.

In the above embodiments, the first limiting portion abuts against the circumferential outer edge of the first plate, which enables the positioning of the first plate and achieves a continuous and sealed connection between the first plate, the first limiting portion, and the first extension portion.

In some embodiments, a side of the first limiting portion facing away from the second plate is flush with a side of the first plate facing away from the second plate.

In the above embodiments, the side of the first limiting portion facing away from the second plate is flush with the side of the first plate facing away from the second plate, such that a flat bottom structure can be formed within the case.

In some embodiments, a projection range of the intermediate member in the first direction covers and exceeds the projection range of the first connecting portion in the first direction; and the frame includes a second extension portion, the second extension portion is disposed on a side of the first plate facing away from the second plate, and the second extension portion is connected to the first connecting portion in a continuous and sealing manner.

In the above embodiments, the projection range of the intermediate member in the first direction covers and exceeds the projection range of the first connecting portion in the first direction, such that a continuous and sealed connection between the first plate and the frame is first achieved from the side of the first plate adjacent to the second plate, and then the intermediate member and the second plate are assembled. The first plate is supported by the second extension portion, and a continuous and sealed connection is formed between the first connecting portion and the second extension portion of the frame, followed by the assembly of the second plate. The second extension portion is configured not only to connect the frame and the end plate, but also to provide support for the welding of the first plate.

In some embodiments, a side of the second extension portion adjacent to the second plate is connected to the first connecting portion in a continuous and sealing manner.

In the above embodiments, the second extension portion is disposed on the side of the first plate facing away from the second plate, and the side of the second extension portion adjacent to the second plate abuts against the first connecting portion and is connected to the first connecting portion in a continuous and sealing manner, thereby achieving a continuous and sealed connection between the first plate and the frame.

In some embodiments, the frame further includes a second limiting portion, the second limiting portion is disposed on a side of the second extension portion adjacent to the second plate, and the second limiting portion abuts against a circumferential outer edge of the first plate.

In the above embodiments, the second limiting portion abuts against the circumferential outer edge of the first plate, which enables the positioning of the first plate and achieves a continuous and sealed connection between the first plate, the second limiting portion, and the second extension portion.

In some embodiments, the side of the second limiting portion adjacent to the second plate is flush with a side of the first plate adjacent to the second plate.

In the above embodiments, the second limiting portion is configured to limit the position of the first plate.

Some embodiments of the present application further provide a battery. The battery includes the case provided in any one of the above embodiments.

In the above embodiments, the battery includes the case according to any one of the above embodiments, and correspondingly, has the beneficial effects of the case.

Some embodiments of the present application further provide an electric device. The electric device includes the battery provided in any one of the above embodiments.

In the above embodiments, the electric device includes the battery according to any one of the above embodiments, and correspondingly, has the beneficial effects of the battery.

Some embodiments of the present application further provide an assembly method for a case, including the following steps:
providing frames; and
providing an end plate, where the end plate includes a first connecting portion and a second connecting portion both facing the frame; and
connecting both a circumferential edge of the first connecting portion and a circumferential edge of the second connecting portion to the frame, where an entire circumferential edge of at least one of the first connecting portion and the second connecting portion is connected to the frame in a continuous and sealing manner.

In the above embodiments, the entire circumferential edge of at least one of the first connecting portion and the second connecting portion is connected to the frame in a continuous and sealing manner to achieve sealing at the joint between the end plate and the frame. The structure is simple, enabling convenient mounting, high assembly efficiency, low cost, and excellent reliability.

In some embodiments, the first connecting portion is positioned closer to an internal space of the case than the second connecting portion;

connecting the entire circumferential edge of at least one of the first connecting portion and the second connecting portion to the frame in a continuous and sealing manner includes: connecting the entire circumferential edge of the first connecting portion to the frame in a continuous and sealing manner, and connecting the circumferential edge of the second connecting portion to the frame via at least two connecting members.

In the above embodiments, the first connecting portion is connected to the frame in a continuous and sealing manner to achieve sealing at the joint between the end plate and the frame, and the second connecting portion is connected to the frame via at least two connecting members to enhance the connection strength between the end plate and the frame. The end plate has fewer components and a simple structure, and the connection operation between the end plate and the frame is convenient, with low cost and high reliability.

In some embodiments, the end plate includes a first plate and a second plate stacked in a first direction; the first connecting portion is disposed on the first plate, and the second connecting portion is disposed on the second plate;
prior to connecting both the circumferential edge of the first connecting portion and the circumferential edge of the second connecting portion to the frame, the assembly method further includes:
placing the frame on a side of the second plate adjacent to the first plate, where the frame is disposed around a circumferential outer edge of the first plate, and a first extension portion on the frame extends between the first plate and the second plate;
connecting the entire circumferential edge of at least one of the first connecting portion and the second connecting portion to the frame in a continuous and sealing manner includes:
connecting the entire circumferential edge of the first connecting portion to the first extension portion in a continuous and sealing manner; and
connecting the circumferential edge of the second connecting portion to the frame via at least two connecting members.

In the above embodiments, the end plate is first fabricated and then connected to the frame. The connection between the end plate and the frame includes an upper portion connection and a lower portion connection. For the upper portion of the end plate, the first plate is connected to the frame in a continuous and sealing manner, and for the lower portion of the end plate, the second plate is connected to the frame via connecting members. The dual-connection fastening method at the upper and lower portions provides a simple structure, thereby enabling convenient mounting, high assembly efficiency, low cost, and excellent reliability.

In some embodiments, the end plate includes a first plate and a second plate stacked in a first direction; the first connecting portion is disposed on the first plate, and the second connecting portion is disposed on the second plate;
providing the frame includes: placing the frame and allowing an end portion of the frame to be connected to the end plate to be positioned above a cavity enclosed by the frame;
connecting the entire circumferential edge of at least one of the first connecting portion and the second connecting portion to the frame in a continuous and sealing manner includes: placing the first plate into an end portion of the frame and supporting the first plate by a second extension portion on the frame; and connecting the entire circumferential edge of the first connecting portion to the second extension portion in a continuous and sealing manner; and
disposing the second plate on a side of the first plate facing away from the frame, where the second plate covers the frame, and connecting the circumferential edge of the second connecting portion to the frame via at least two connecting members.

In the above embodiments, the first plate of the end plate is first connected to the frame in a continuous and sealing manner, followed by the mounting of the second plate; and finally, the second plate is integrally connected to the frame, thereby forming a case structure with fewer components and a simple construction. The dual-connection fastening method at the upper and lower portions provides a simple structure, thereby enabling convenient mounting, high assembly efficiency, low cost, and excellent reliability.

### BRIEF DESCRIPTION OF THE DRAWINGS

To more clearly illustrate the technical solutions in the embodiments of the present application, the drawings required for illustrating the embodiments of the present application are briefly described below. Apparently, the drawings in the following description illustrate merely some embodiments of the present application, and those of ordinary skills in the art may still derive other drawings from these drawings without creative efforts.
FIG. 1 is a schematic structural diagram of a vehicle disclosed in some embodiments of the present application;
FIG. 2 is a schematic diagram of an exploded structure of a battery disclosed in some embodiments of the present application;
FIG. 3 is a cross-sectional schematic diagram of a case disclosed in a first embodiment of the present application;
FIG. 4 is a cross-sectional schematic diagram of a case disclosed in a second embodiment of the present application;
FIG. 5 is a cross-sectional schematic diagram of a case disclosed in a third embodiment of the present application;
FIG. 6 is a schematic diagram of an exploded structure of an end plate disclosed in some embodiments of the present application;
FIG. 7 is a cross-sectional schematic diagram of an end plate disclosed in a first embodiment of the present application;
FIG. 8 is a partial enlarged schematic diagram of FIG. 7;
FIG. 9 is a schematic diagram of a first honeycomb structure disclosed in some embodiments of the present application;
FIG. 10 is a schematic diagram of a second honeycomb structure disclosed in some embodiments of the present application;
FIG. 11 is a cross-sectional schematic diagram of an end plate disclosed in a second embodiment of the present application;
FIG. 12 is a partial enlarged schematic diagram of FIG. 11;
FIG. 13 is a schematic diagram of an exploded structure of a case disclosed in a first embodiment of the present application;
FIG. 14 is a schematic diagram from a top view of a case disclosed in a first embodiment of the present application;
FIG. 15 is a schematic diagram from a bottom view of a case disclosed in a first embodiment of the present application;
FIG. 16 is a partial cross-sectional schematic diagram of a case disclosed in a first embodiment of the present application;
FIG. 17 is a schematic diagram of an exploded structure of a case disclosed in a second embodiment of the present application;
FIG. 18 is a schematic diagram of placing a first plate on a frame of a case disclosed in a second embodiment of the present application;
FIG. 19 is a partial cross-sectional schematic diagram after a first plate is connected to a frame of a case disclosed in a second embodiment of the present application;
FIG. 20 is a schematic diagram of placing an intermediate member and a second plate after a first plate is connected to a frame of a case disclosed in a second embodiment of the present application;
FIG. 21 is a schematic diagram after a first plate is connected to a frame of a case and the first plate is connected to an intermediate member and a second plate disclosed in a second embodiment of the present application;
FIG. 22 is a schematic diagram illustrating the connection between a frame and a second plate of a case disclosed in a second embodiment of the present application; and
FIG. 23 is a partial cross-sectional schematic diagram of a case disclosed in a second embodiment of the present application.

The drawings are not drawn to scale.

The reference numerals are as follows: 10-end plate; 1-first plate; 11-first connecting portion; 2-second plate; 21-second connecting portion; 3-intermediate member; 31-first component; 32-second component; 33-first honeycomb structure; 34-second honeycomb structure; 4-flow channel; 20-frame; 201-first extension portion; 202-second extension portion; 203-first limiting portion; 204-second limiting portion; 30-connecting member; 40-weld seam; 100-battery; 101-case assembly; 101a-first case; 101b-second case; 102-battery cell; 200-vehicle; 200a-vehicle axle; 200b-wheel; 200c-motor; 200d-controller.

### DETAILED DESCRIPTION

Implementations of the present application will be described in further detail with reference to the drawings and embodiments. The following detailed description of the embodiments and the drawings are used for the exemplary illustration of the principles of the present application, but are not intended to limit the scope of the present application. That is, the present application is not limited to the described embodiments.

In the description of the present application, it should be noted that, unless otherwise specified, "a plurality" means two or more; the orientations or positional relationships indicated by the terms "upper", "lower", "left", "right", "inner", "outer", and the like are merely for the convenience of describing the present application and simplifying the description, rather than indicating or implying that the apparatus or element referred to must have a specific orientation or be configured and operated in the specific orientation, and thus shall not be construed as limitations to the present application. Furthermore, the terms "first", "second", "third", and the like are used for descriptive purposes only and shall not be construed as indicating or implying relative importance. The "perpendicular" is not strictly perpendicular but is within the allowable range of error. The "parallel" is not strictly parallel but is within the allowable range of error.

The following description is given with the directional terms as illustrated in the drawings and is not intended to limit the specific structure of the present application. In the description of the present application, it should further be noted that unless otherwise explicitly specified or defined, the terms "mount", "connect", and "link" shall be construed broadly and may be, for example, fixed connection, detachable connection, or integral connection, or direct connection or indirect connection via an intermediate. For those of ordinary skills in the art, the specific meaning of the above terms in the present application may be interpreted according to the specific condition.

With the increasing popularity of new energy vehicles, power batteries, as a type of rechargeable battery, serve as the power source of new energy vehicles and are widely used in the field of new energy vehicles. In some related technologies, a battery includes a case and a battery cell. The battery cell is accommodated in the case. The case is associated with issues including a large number of components and structural complexity.

Based on this, some embodiments of the present application provide a case, a battery, an electric device, and an assembly method for a case, for alleviating the complexity of case structures.

The battery of the present application can be used in an electric device, and can provide electric energy for the electric device. The electric device may be a mobile phone, a portable device, a laptop, an electric bicycle, an electric vehicle, a ship, a spacecraft, an electric toy, an electric tool, or the like. The spacecraft includes an airplane, a rocket, a space shuttle, a spaceship, and the like. The electric toy includes a stationary or mobile electric toy, such as a game console, an electric vehicle toy, an electric ship toy, and an electric airplane toy. The electric tool includes a metal cutting electric tool, a grinding electric tool, an assembly electric tool, and a railway-specific electric tool, such as an electric drill, an electric grinder, an electric wrench, an electric screwdriver, an electric hammer, an impact drill, a concrete vibrator, or an electric planer.

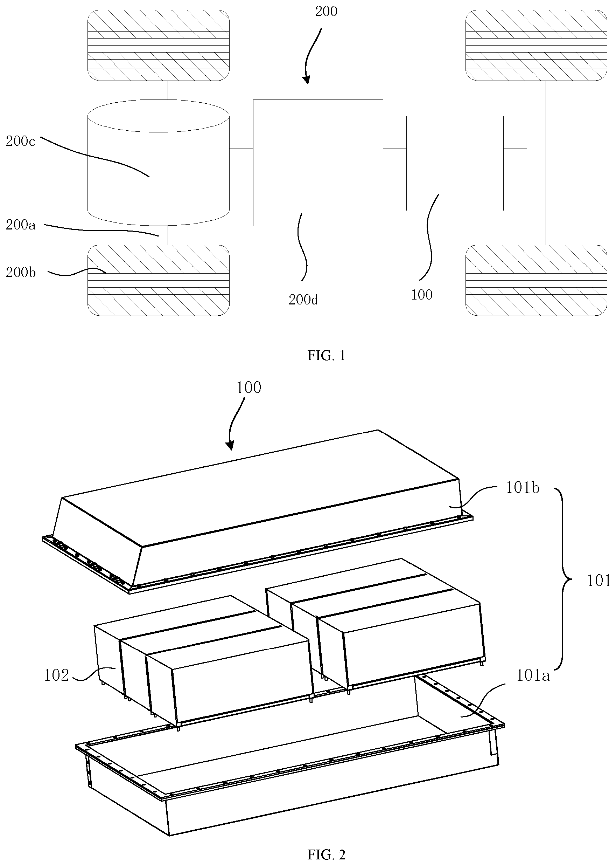

Referring to FIG. 1, the electric device of the present application may be a vehicle 200, such as a new energy vehicle, and the new energy vehicle may be a pure electric vehicle, a hybrid electric vehicle, an extended-range vehicle, or the like.

The vehicle 200 includes a vehicle axle 200a, wheels 200b, a motor 200c, a controller 200d and a battery 100. The wheels 200b are connected to the vehicle axle 200a, the motor 200c is configured to drive the vehicle axle 200a to rotate, the controller 200d is configured to control the motor 200c to operate, and the battery 100 may be disposed at the bottom, the front, or the rear of the vehicle 200, and is configured to provide electric energy for the operation of the motor 200c and other components in the vehicle.

Referring to FIG. 2, the battery 100 includes a case assembly 101 and at least one battery cell 102. The at least one battery cell 102 includes two or more battery cells 102. The plurality of battery cells 102 may be connected in series, in parallel, or in series-parallel, where the series-parallel connection refers to a combination of series connection and parallel connection. The interior of the case assembly 101 is of a hollow structure, and the at least one battery cell 102 is accommodated in the case assembly 101.

The case assembly 101 may include a first case 101a and a second case 101b. The plurality of battery cells 102, after being connected in parallel, in series, or in series-parallel, are placed in a sealed chamber formed after the first case 101a and the second case 101b are snap-fitted together.

At least one of the first case 101a and the second case 101b may be the case provided in the embodiments of the present application.

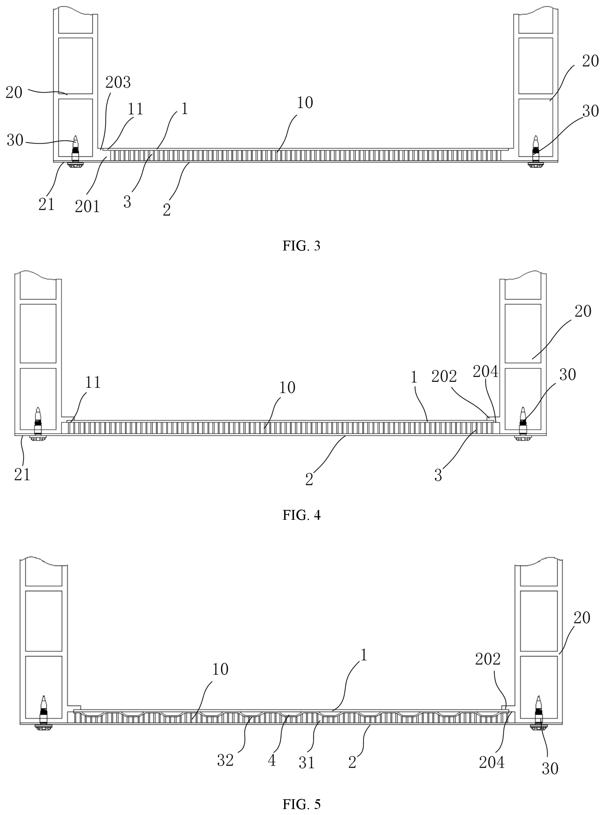

Referring to FIGs. 3 to 5, some embodiments of the present application provide a case including a frame 20 and an end plate 10.

The end plate 10 is connected to the frame 20, and the end plate 10 includes a first connecting portion 11 and a second connecting portion 21 both facing the frame 20. The circumferential edge of the first connecting portion 11 and the circumferential edge of the second connecting portion 21 are both connected to the frame 20. The entire circumferential edge of at least one of the first connecting portion 11 and the second connecting portion 21 is connected to the frame 20 in a continuous and sealing manner.

In the above embodiments, the entire circumferential edge of at least one of the first connecting portion 11 and the second connecting portion 21 is connected to the frame 20 in a continuous and sealing manner to achieve sealing at the joint between the end plate 10 and the frame 20. The structure is simple, enabling convenient mounting, high assembly efficiency, low cost, and excellent reliability.

In some embodiments, the frame 20 includes circumferential sidewalls, and the circumferential sidewalls enclose a cavity. For example, the frame 20 includes four sidewalls connected in sequence.

In some embodiments, the first connecting portion 11 and the second connecting portion 21 are not on the same plane.

In the above embodiments, the entire circumferential edge of the first connecting portion 11 and the entire circumferential edge of the second connecting portion 21 may be both connected to the frame 20 in a continuous and sealing manner, or one of the entire circumferential edges may be connected to the frame 20 in a continuous and sealing manner. The first connecting portion 11 and the second connecting portion 21 are not on the same plane. When one of the first connecting portion 11 and the second connecting portion 21 is connected, the other of the first connecting portion 11 and the second connecting portion 21 is not affected.

In some embodiments, the first connecting portion 11 is positioned closer to the internal space of the case than the second connecting portion 21.

In the above embodiments, the entire circumferential edge of the first connecting portion 11 and the entire circumferential edge of the second connecting portion 21 may be both connected to the frame 20 in a continuous and sealing manner, or one of the entire circumferential edges may be connected to the frame 20 in a continuous and sealing manner. The first connecting portion 11 is positioned closer to the internal space of the case than the second connecting portion 21. When one of the first connecting portion 11 and the second connecting portion 21 is connected, the other of the first connecting portion 11 and the second connecting portion 21 is not affected.

In some embodiments, the entire circumferential edge of the first connecting portion 11 is connected to the frame 20 in a continuous and sealing manner, and the circumferential edge of the second connecting portion 21 is connected to the frame 20 via at least two connecting members 30.

In the above embodiments, the entire circumferential edge of the first connecting portion 11 is connected to the frame 20 in a continuous and sealing manner to achieve sealing at the joint between the end plate 10 and the frame 20, and the circumferential edge of the second connecting portion 21 is connected to the frame 20 via at least two connecting members 30 to enhance the connection strength between the end plate 10 and the frame 20. The end plate 10 has fewer components and a simple structure, and the connection operation between the end plate 10 and the frame 20 is convenient, with low cost and high reliability.

In some embodiments, the entire circumferential edge of at least one of the first connecting portion 11 and the second connecting portion 21 is connected to the frame 20 in a continuous and sealing manner by friction stir welding.

In the above embodiments, the friction stir welding is used to form a continuous and sealed connection, which is convenient to operate, facilitates mechanization and automation, and requires simple equipment, with low cost.

In the above embodiments, the friction stir welding is a type of solid-state welding. Certainly, the continuous and sealed connection is not limited to solid-state welding, and may also be formed by fusion welding, brazing, or other methods.

In the above embodiments, the entire circumferential edge of the first connecting portion 11 is connected to the frame 20 in a continuous and sealing manner by friction stir welding; and/or the entire circumferential edge of the second connecting portion 21 is connected to the frame 20 in a continuous and sealing manner by friction stir welding.

In some embodiments, the entire circumferential edge of one of the first connecting portion 11 and the second connecting portion 21 is connected to the frame 20 in a continuous and sealing manner, and the circumferential edge of the other connecting portion is connected to the frame 20 via at least two connecting members 30.

In the above embodiments, the entire circumferential edge of one of the first connecting portion 11 and the second connecting portion 21 is connected to the frame 20 in a continuous and sealing manner to achieve sealing at the joint between the end plate 10 and the frame 20, and the circumferential edge of the other of the first connecting portion 11 and the second connecting portion 21 is connected to the frame 20 via at least two connecting members 30 to enhance the connection strength between the end plate 10 and the frame 20. The end plate 10 has fewer components and a simple structure, and the connection operation between the end plate 10 and the frame 20 is convenient, with low cost and high reliability.

In some embodiments, the connecting member 30 includes a hot-melt self-tapping screw.

In the above embodiments, the circumferential edge of the other of the first connecting portion 11 and the second connecting portion 21 is connected to the frame 20 via at least two hot-melt self-tapping screws. The connection to the frame 20 using at least two hot-melt self-tapping screws eliminates the need for pre-drilling and enables convenient operation at low cost.

In some embodiments, the connecting member 30 includes a bolt, a screw, a connecting pin, or the like.

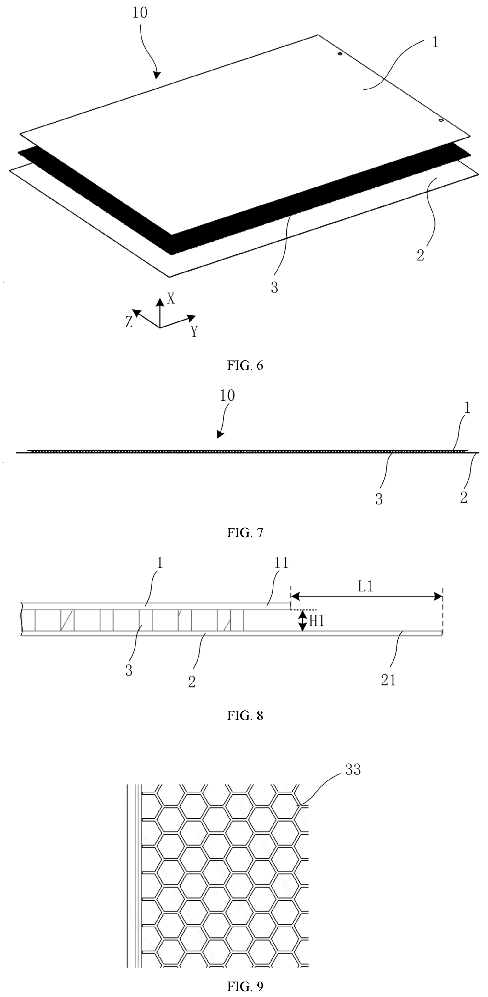

Referring to FIGs. 6 to 8, in some embodiments, the end plate 10 includes a first plate 1 and a second plate 2 stacked in a first direction X. The first connecting portion 11 is disposed on the first plate 1, and the second connecting portion 21 is disposed on the second plate 2.

In the above embodiments, the first direction X is parallel to the direction from the first plate 1 to the second plate 2.

In the above embodiments, the end plate 10 includes a first plate 1 and a second plate 2 stacked in the first direction X. The first connecting portion 11 is disposed on the first plate 1, and the second connecting portion 21 is disposed on the second plate 2. The entire circumferential edge of at least one of the first connecting portion 11 and the second connecting portion 21 is connected to the frame 20 in a continuous and sealing manner to achieve sealing at the joint between the end plate 10 and the frame 20. The end plate 10 has fewer components and a simple structure, and the connection operation between the end plate 10 and the frame 20 is convenient, with low cost and high reliability.

In some embodiments, the first plate 1 includes an aluminum plate.

In some embodiments, the second plate 2 includes a steel plate or an aluminum plate.

In some embodiments, the first connecting portion 11 is arranged in a closed loop along the circumferential edge of the first plate 1, and the first connecting portion 11 is connected to the frame 20 in a continuous and sealing manner. The second connecting portion 21 is connected to the frame 20 via at least two connecting members 30.

In the above embodiments, the end plate 10 includes a first plate 1 and a second plate 2 that are disposed in a stacked manner. The first connecting portion 11 of the first plate 1 is connected to the frame 20 in a continuous and sealing manner to achieve sealing at the joint between the end plate 10 and the frame 20, and the second connecting portion 21 of the second plate 2 is connected to the frame 20 via at least two connecting members 30 to enhance the connection strength between the end plate 10 and the frame 20. The end plate 10 has fewer components and a simple structure, and the connection operation between the end plate 10 and the frame 20 is convenient, with low cost and high reliability.

In some embodiments, the first connecting portion 11 is connected to the frame 20 in a continuous and sealing manner by friction stir welding (FSW).

In the above embodiments, the first connecting portion 11 is connected to the frame 20 by friction stir welding, which is convenient to operate, facilitates mechanization and automation, and requires simple equipment, with low cost.

In some embodiments, the case further includes a connecting member 30, and the connecting member 30 includes a hot-melt self-tapping screw FDS.

In the above embodiments, the second connecting portion 21 is connected to the frame 20 via a hot-melt self-tapping screw, thereby eliminating the need for pre-drilling and enabling convenient operation at a low cost.

Referring to FIGs. 3 and 4, in some embodiments, the end plate 10 further includes an intermediate member 3 disposed between the first plate 1 and the second plate 2. The intermediate member 3 connects the first plate 1 and the second plate 2, such that a spacing is formed between the first plate 1 and the second plate 2.

In the above embodiments, the intermediate member 3 is disposed between the first plate 1 and the second plate 2, such that a spacing is formed between the first plate 1 and the second plate 2 due to the presence of the intermediate member 3, thereby providing a buffering effect for the end plate 10 and enhancing the impact resistance of the end plate 10.

In some embodiments, the intermediate member 3 is configured as a honeycomb structure.

In the above embodiments, the honeycomb-structured intermediate member 3 is disposed between the first plate 1 and the second plate 2, thereby providing a relatively good buffering effect for the end plate 10 and enhancing the impact resistance of the end plate 10.

In some embodiments, the material of the intermediate member 3 includes plastic, such as polypropylene (PP), or the material of the intermediate member 3 includes an aluminum material.

In some embodiments, the intermediate member 3 is made of a PP material and has a honeycomb structure. The first plate 1, the second plate 2, and the intermediate member 3 disposed between the first plate 1 and the second plate 2 are integrated into an end plate 10 of a three-layer structure by a hot melt process.

In some embodiments, the intermediate member 3 is made of an aluminum material and has a honeycomb structure. The first plate 1, the second plate 2, and the intermediate member 3 disposed between the first plate 1 and the second plate 2 are integrated into an end plate 10 of a three-layer structure by aluminum alloy brazing.

In some embodiments, the first plate 1 is an aluminum plate, the second plate 2 is a steel plate, and the intermediate member 3 is a PP honeycomb structure. The aluminum plate, the PP honeycomb structure, and the steel plate are press-fitted into an integral structure to form the end plate 10.

Referring to FIG. 5, in some embodiments, the intermediate member 3 forms at least one flow channel 4 between the first plate 1 and the second plate 2, and an extending direction of the flow channel 4 intersects the first direction X.

In the above embodiments, the intermediate member 3 forms at least one flow channel 4 between the first plate 1 and the second plate 2, such that a cooling liquid can be delivered through the flow channel 4 to reduce the temperature of the end plate 10 and other components abutting against the end plate 10. Additionally, the intermediate member 3 can provide a buffering effect, thereby enhancing the impact resistance of the end plate 10.

In some embodiments, the extending direction of the flow channel 4 is perpendicular to the first direction X.

The first direction X is parallel to the direction from the first plate 1 to the second plate 2. The first direction X is respectively perpendicular to a second direction Y and a third direction Z, and the second direction Y is perpendicular to the third direction Z.

In some embodiments, referring to FIG. 5, the intermediate member 3 includes a first component 31 and a second component 32. The first component 31 is configured as a honeycomb structure, and the second component 32 forms at least one flow channel 4 between the first component 31 and the first plate 1 or the second plate 2. The extending direction of the flow channel 4 intersects the first direction X.

In the above embodiments, the intermediate member 3 includes a first component 31 and a second component 32. The first component 31 is configured as a honeycomb structure, thereby providing a buffering effect and enhancing the impact resistance of the end plate 10. The second component 32 forms at least one flow channel 4 between the first plate 1 and the second plate 2, such that a cooling liquid can be delivered through the flow channel 4 to reduce the temperature of the end plate 10 and other components abutting against the end plate 10. Additionally, the second component 32 can provide a buffering effect, thereby enhancing the impact resistance of the end plate 10.

Referring to FIG. 9, in some embodiments, the honeycomb structure includes a first honeycomb structure 33, and the first honeycomb structure 33 is a hexagonal honeycomb structure.

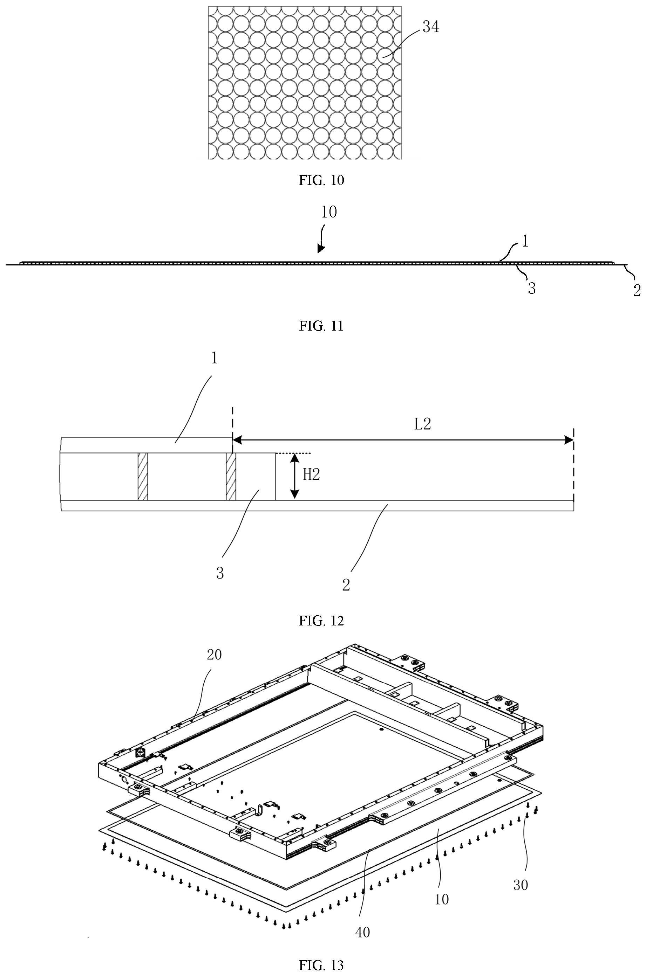

Referring to FIG. 10, in some embodiments, the honeycomb structure further includes a second honeycomb structure 34, and the second honeycomb structure 34 is a circular honeycomb structure.

Certainly, the honeycomb structure is not limited to the hexagonal honeycomb structure and the circular honeycomb structure.

Referring to FIGs. 7, 8, 11, and 12, in some embodiments, the projection range of the second connecting portion 21 in the first direction X covers and exceeds the projection range of the first connecting portion 11 in the first direction X. Referring to FIGs. 3 to 5, the frame 20 is disposed on the side of the second plate 2 adjacent to the first plate 1, and the frame 20 is disposed around the circumferential outer edge of the first plate 1.

In the above embodiments, the frame 20 is disposed on the side of the second plate 2 adjacent to the first plate 1, the second plate 2 covers the frame 20, the frame 20 is disposed around the circumferential outer edge of the first plate 1, and the projection range of the second connecting portion 21 in the first direction X covers and exceeds the projection range of the first connecting portion 11 in the first direction X, so as to form a continuous and sealed connection between the first connecting portion 11 at the circumferential edge of the first plate 1 and the frame 20. Therefore, a sealed connection between the frame 20 and the end plate 10 can be achieved, thereby sealing the cavity enclosed by the frame 20 at the end plate 10. The at least two connecting members 30 disposed at intervals along the circumferential edge of the second plate 2 are connected to the frame 20 to enhance the connection strength between the end plate 10 and the frame 20.

Referring to FIGs. 7 and 8, in some embodiments, the projection range of the first connecting portion 11 in the first direction X covers and exceeds the projection range of the intermediate member 3 in the first direction X. Referring to FIG. 3, the frame 20 includes a first extension portion 201 extending between the first plate 1 and the second plate 2, and the first extension portion 201 is connected to the first connecting portion 11 in a continuous and sealing manner.

In the above embodiments, the projection range of the first connecting portion 11 in the first direction X covers and exceeds the projection range of the intermediate member 3 in the first direction X, so as to allow the first plate 1, the intermediate member 3, and the second plate 2 to be assembled first, and then the first extension portion 201 of the frame 20 to be inserted between the first plate 1 and the second plate 2, such that the first plate 1 and the frame 20 are connected in a continuous and sealing manner from the side of the first plate 1 facing away from the second plate 2. The first extension portion 201 is configured to connect the frame 20 to the end plate 10, and can also provide support for the welding of the first plate 1.

In some embodiments, the side of the first extension portion 201 facing away from the second plate 2 is connected to the first connecting portion 11 in a continuous and sealing manner.

In the above embodiments, the first extension portion 201 of the frame 20 is inserted between the first plate 1 and the second plate 2, and the side of the first extension portion 201 facing away from the second plate 2 abuts against the first connecting portion 11 to form a continuous and sealed connection, thereby achieving a continuous and sealed connection between the first plate 1 and the frame 20.

In the above embodiments, the first plate 1 and the second plate 2 are first assembled into the end plate 10, and then the first connecting portion 11 is connected to the first extension portion 201 of the frame 20 in a continuous and sealing manner from the interior of the cavity enclosed by the frame 20. The first extension portion 201 is configured to connect the frame 20 to the end plate 10, and can also provide support for the welding of the first plate 1.

In some embodiments, the projection range of the first connecting portion 11 in the first direction X covers and exceeds the projection range of the intermediate member 3 in the first direction X. The projection range of the second connecting portion 21 in the first direction X covers and exceeds the projection range of the first connecting portion 11 in the first direction X, such that the first extension portion 201 extends between the first plate 1 and the second plate 2.

In some embodiments, the first extension portion 201 abuts against the circumferential outer edge of the intermediate member 3.

In some embodiments, the frame 20 further includes a first limiting portion 203, the first limiting portion 203 is disposed on the side of the first extension portion 201 facing away from the second plate 2, and the first limiting portion 203 abuts against the circumferential outer edge of the first plate 1.

In the above embodiments, the first limiting portion 203 abuts against the circumferential outer edge of the first plate 1, which enables the positioning of the first plate 1 and achieves a continuous and sealed connection between the first plate 1, the first limiting portion 203, and the first extension portion 201.

In the above embodiments, the first limiting portion 203 is disposed on the side of the first extension portion 201 facing away from the second plate 2. The first limiting portion 203 and the first extension portion 201 together form a step-shaped structure, which enables the positioning of the first plate 1 and achieves a continuous and sealed connection to the first plate 1.

In some embodiments, the side of the first limiting portion 203 facing away from the second plate 2 is flush with the side of the first plate 1 facing away from the second plate 2.

In the above embodiments, the side of the first limiting portion 203 facing away from the second plate 2 is flush with the side of the first plate 1 facing away from the second plate 2, such that a flat bottom structure can be formed within the case.

Referring to FIGs. 11 and 12, in some embodiments, the projection range of the intermediate member 3 in the first direction X covers and exceeds the projection range of the first connecting portion 11 in the first direction X. Referring to FIGs. 4 and 5, the frame 20 includes a second extension portion 202, the second extension portion 202 is disposed on the side of the first plate 1 facing away from the second plate 2, and the second extension portion 202 is connected to the first connecting portion 11 in a continuous and sealing manner.

In the above embodiments, the projection range of the intermediate member 3 in the first direction X covers and exceeds the projection range of the first connecting portion 11 in the first direction X, such that a continuous and sealed connection between the first plate 1 and the frame 20 is first achieved from the side of the first plate 1 adjacent to the second plate 2, and then the intermediate member 3 and the second plate 2 are assembled.

In the above embodiments, the first plate 1 is supported by the second extension portion 202, and a continuous and sealed connection is formed between the first connecting portion 11 and the second extension portion 202 of the frame 20, followed by the assembly of the second plate 2. The second extension portion 202 is configured not only to connect the frame 20 and the end plate 10, but also to provide support for the welding of the first plate 1.

In some embodiments, the side of the second extension portion 202 adjacent to the second plate 2 is connected to the first connecting portion 11 in a continuous and sealing manner.

In the above embodiments, the second extension portion 202 is disposed on the side of the first plate 1 facing away from the second plate 2, and the side of the second extension portion 202 adjacent to the second plate 2 abuts against the first connecting portion 11 and is connected to the first connecting portion 11 in a continuous and sealing manner, thereby achieving a continuous and sealed connection between the first plate 1 and the frame 20.

In some embodiments, the frame 20 further includes a second limiting portion 204, the second limiting portion 204 is disposed on the side of the second extension portion 202 adjacent to the second plate 2, and the second limiting portion 204 abuts against the circumferential outer edge of the first plate 1.

In the above embodiments, the second limiting portion 204 abuts against the circumferential outer edge of the first plate 1, which enables the positioning of the first plate 1 and achieves a continuous and sealed connection between the first plate 1, the second limiting portion 204, and the second extension portion 202.

In some embodiments, the side of the second limiting portion 204 adjacent to the second plate 2 is flush with the side of the first plate 1 adjacent to the second plate 2.

In the above embodiments, the second limiting portion 204 is configured to limit the position of the first plate 1.

In some embodiments, the projection of the intermediate member 3 in the first direction X covers and exceeds the projection of the first plate 1 in the first direction X, and the projection of the second plate 2 in the first direction X covers and exceeds the projection of the intermediate member 3 in the first direction X. The first direction X is parallel to the direction from the first plate 1 to the second plate 2.

In the above embodiments, the circumferential edge of the intermediate member 3 exceeds the circumferential edge of the first plate 1 to abut against the frame 20. The circumferential edge of the second plate 2 exceeds the circumferential edge of the intermediate member 3, such that the second plate 2 covers the frame 20 and is connected to the frame 20.

Some embodiments of the present application further provide a battery 100 including the case according to any one of the above embodiments.

The case may be at least one of the first case 101a and the second case 101b.

In some embodiments, the battery 100 further includes at least one battery cell 102. The at least one battery cell 102 includes two or more battery cells 102. The plurality of battery cells 102 may be connected in series, in parallel, or in series-parallel, where the series-parallel connection refers to a combination of series connection and parallel connection.

In some embodiments, the battery 100 includes a first case 101a and a second case 101b. The plurality of battery cells 102, after being connected in parallel, in series, or in series-parallel, are placed in a sealed chamber formed after the first case 101a and the second case 101b are snap-fitted together.

At least one of the first case 101a and the second case 101b is the case provided in any one of the above embodiments of the present application, and correspondingly, has the beneficial effects of the case.

Some embodiments of the present application further provide an electric device including the battery 100 according to any one of the above embodiments.

The electric device includes the battery 100 according to any one of the above embodiments, and correspondingly, has the beneficial effects of the battery 100.

In some embodiments, the electric device includes a vehicle.

Some embodiments of the present application further provide an assembly method for a case, including the following steps:
providing frames 20; and
providing an end plate 10, where the end plate 10 includes a first connecting portion 11 and a second connecting portion 21 both facing the frame 20; and
connecting both the circumferential edge of the first connecting portion 11 and the circumferential edge of the second connecting portion 21 to the frame 20, where the entire circumferential edge of at least one of the first connecting portion 11 and the second connecting portion 21 is connected to the frame 20 in a continuous and sealing manner.

In the above embodiments, the entire circumferential edge of at least one of the first connecting portion 11 and the second connecting portion 21 is connected to the frame 20 in a continuous and sealing manner to achieve sealing at the joint between the end plate 10 and the frame 20. The structure is simple, enabling convenient mounting, high assembly efficiency, low cost, and excellent reliability.

In some embodiments, the first connecting portion 11 is positioned closer to the internal space of the case than the second connecting portion 21.

Connecting the entire circumferential edge of at least one of the first connecting portion 11 and the second connecting portion 21 to the frame 20 in a continuous and sealing manner includes: connecting the entire circumferential edge of the first connecting portion 11 to the frame 20 in a continuous and sealing manner, and connecting the circumferential edge of the second connecting portion 21 to the frame 20 via at least two connecting members 30.

In the above embodiments, the first connecting portion 11 is connected to the frame 20 in a continuous and sealing manner to achieve sealing at the joint between the end plate 10 and the frame 20, and the second connecting portion 21 is connected to the frame 20 via at least two connecting members 30 to enhance the connection strength between the end plate 10 and the frame 20. The end plate 10 has fewer components and a simple structure, and the connection operation between the end plate 10 and the frame 20 is convenient, with low cost and high reliability.

In the above embodiments, the end plate 10 is first fabricated and then connected to the frame 20. The connection between the end plate 10 and the frame 20 includes an upper portion connection and a lower portion connection. For the upper portion of the end plate 10, the first plate 1 is connected to the frame 20 in a continuous and sealing manner, and for the lower portion of the end plate 10, the second plate 2 is connected to the frame 20 via connecting members 30. The dual-connection fastening method at the upper and lower portions provides a simple structure, thereby enabling convenient mounting, high assembly efficiency, low cost, and excellent reliability.

In some embodiments, the end plate 10 includes a first plate 1 and a second plate 2 stacked in the first direction X. The first connecting portion 11 is disposed on the first plate 1, and the second connecting portion 21 is disposed on the second plate 2.

Prior to connecting both the circumferential edge of the first connecting portion 11 and the circumferential edge of the second connecting portion 21 to the frame 20, the assembly method further includes:
placing the frame 20 on the side of the second plate 2 adjacent to the first plate 1, where the frame 20 is disposed around the circumferential outer edge of the first plate 1, and the first extension portion 201 on the frame 20 extends between the first plate 1 and the second plate 2.

Connecting the entire circumferential edge of at least one of the first connecting portion 11 and the second connecting portion 21 to the frame 20 in a continuous and sealing manner includes:
connecting the entire circumferential edge of the first connecting portion 11 to the first extension portion 201 in a continuous and sealing manner; and
connecting the circumferential edge of the second connecting portion 21 to the frame 20 via at least two connecting members 30.

In the above embodiments, the end plate 10 includes a first plate 1 and a second plate 2 that are disposed in a stacked manner. The first connecting portion 11 of the first plate 1 is connected to the frame 20 in a continuous and sealing manner to achieve sealing at the joint between the end plate 10 and the frame 20, and the second connecting portion 21 of the second plate 2 is connected to the frame 20 via at least two connecting members 30 to enhance the connection strength between the end plate 10 and the frame 20. The end plate 10 has fewer components and a simple structure, and the connection operation between the end plate 10 and the frame 20 is convenient, with low cost and high reliability.

In some embodiments, the end plate 10 includes a first plate 1 and a second plate 2 stacked in the first direction X. The first connecting portion 11 is disposed on the first plate 1, and the second connecting portion 121 is disposed on the second plate 2.

Providing the frame 20 includes: placing the frame 20 and allowing the end portion of the frame 20 to be connected to the end plate 10 to be positioned above a cavity enclosed by the frame 20.

Connecting the entire circumferential edge of at least one of the first connecting portion 11 and the second connecting portion 21 to the frame 20 in a continuous and sealing manner includes: placing the first plate 1 into the end portion of the frame 20 and supporting the first plate by the second extension portion 202 on the frame 20; and connecting the entire circumferential edge of the first connecting portion 11 to the second extension portion 202 in a continuous and sealing manner; and
disposing the second plate 2 on the side of the first plate 1 facing away from the frame 20, where the second plate 2 covers the frame 20, and connecting the circumferential edge of the second connecting portion 21 to the frame 20 via at least two connecting members 30.

In the above embodiments, the end plate 10 includes a first plate 1 and a second plate 2 that are disposed in a stacked manner. The first connecting portion 11 of the first plate 1 is connected to the frame 20 in a continuous and sealing manner to achieve sealing at the joint between the end plate 10 and the frame 20, and the second connecting portion 21 of the second plate 2 is connected to the frame 20 via at least two connecting members 30 to enhance the connection strength between the end plate 10 and the frame 20. The end plate 10 has fewer components and a simple structure, and the connection operation between the end plate 10 and the frame 20 is convenient, with low cost and high reliability.

In the above embodiments, the first plate 1 of the end plate 10 is first connected to the frame 20 in a continuous and sealing manner, followed by the mounting of the second plate 2; and finally, the second plate 2 is integrally connected to the frame 20, thereby forming a case structure with fewer components and a simple construction. The dual-connection fastening method at the upper and lower portions provides a simple structure, thereby enabling convenient mounting, high assembly efficiency, low cost, and excellent reliability.

The present application provides two assembly methods for a case, which are described below with reference to FIGs. 13 to 23.

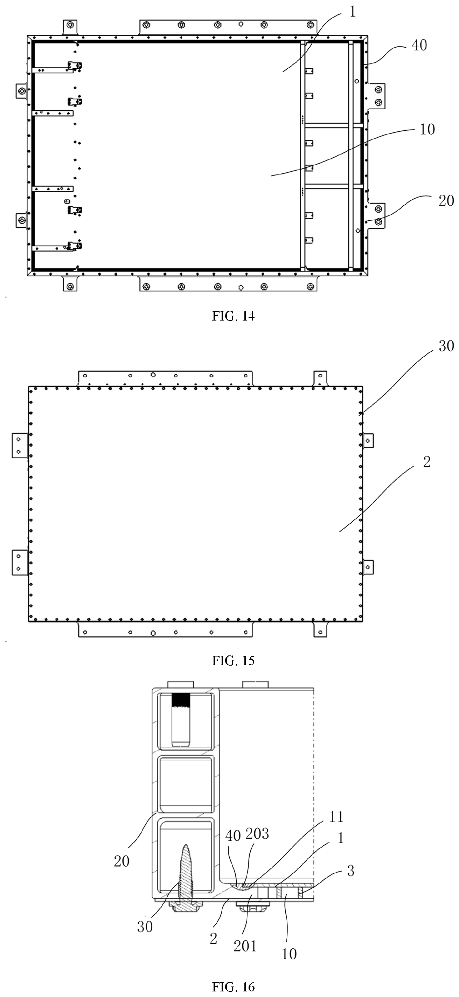

Referring to FIGs. 13 to 16, some embodiments provide an assembly method for a case, including the following steps:
referring to FIG. 13, preparing an end plate 10 and a frame 20, where the end plate 10 includes a first plate 1 and a second plate 2 that are disposed in a stacked manner;
referring to FIG. 14, placing the frame 20 on the side of the second plate 2 adjacent to the first plate 1, where the frame 20 is disposed around the circumferential outer edge of the first plate 1, and the first extension portion 201 on the frame 20 extends between the first plate 1 and the second plate 2 (referring to FIG. 3); connecting the circumferential edge of the first plate 1 to the first extension portion 201 in a continuous and sealing manner; and
referring to FIG. 15, connecting the circumferential edge of the second plate 2 to the frame 20 via at least two connecting members 30.

Referring to FIG. 16, which is a schematic diagram of the case after assembly, the circumferential edge of the first plate 1 is connected to the first extension portion 201 in a continuous and sealing manner, and the circumferential edge of the second plate 2 is connected to the frame 20 via at least two connecting members 30.

In the above embodiments, the end plate 10 is first fabricated and then connected to the frame 20. The connection between the end plate 10 and the frame 20 includes an upper portion connection and a lower portion connection. For the upper portion of the end plate 10, the first plate 1 is connected to the frame 20 in a continuous and sealing manner, and for the lower portion of the end plate 10, the second plate 2 is connected to the frame 20 via connecting members 30. The dual-connection fastening method at the upper and lower portions provides a simple structure, thereby enabling convenient mounting, high assembly efficiency, low cost, and excellent reliability.

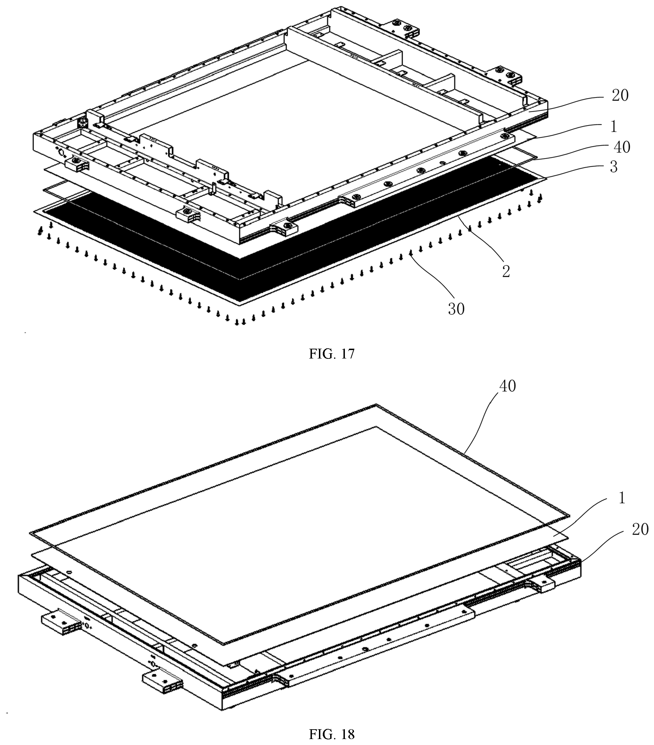

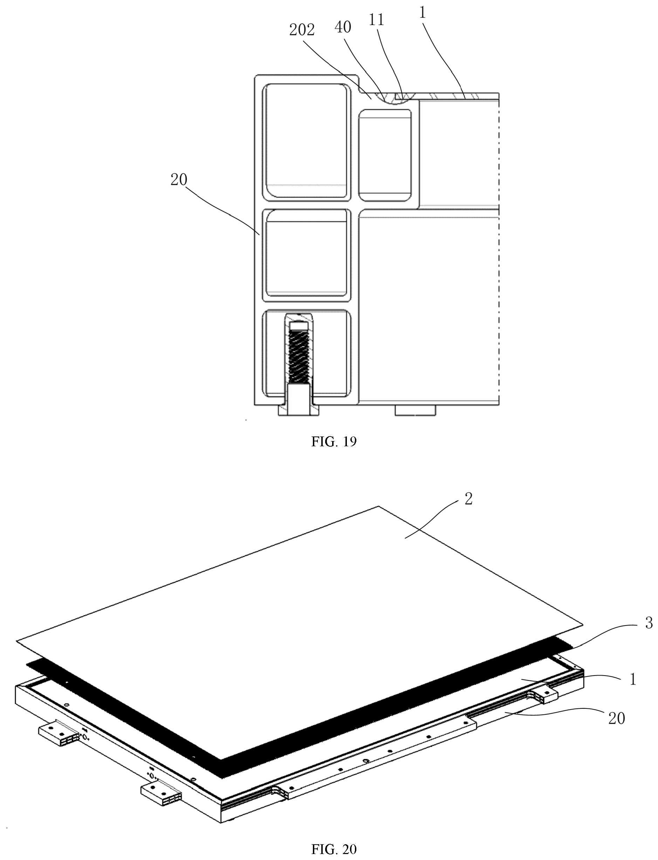

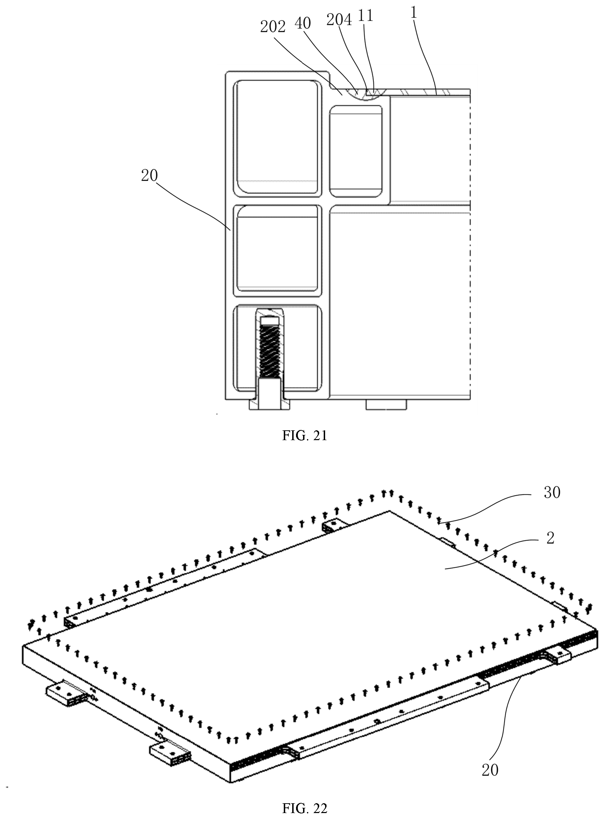

Referring to FIGs. 17 to 23, some other embodiments provide an assembly method for a case, including the following steps:
referring to FIG. 18, placing the frame 20 and allowing the end portion of the frame 20 to be positioned above a cavity enclosed by the frame 20;
referring to FIG. 19, placing the first plate 1 into the end portion of the frame 20 and supporting the first plate by the second extension portion 202 on the frame 20; and connecting the circumferential edge of the first plate 1 to the second extension portion 202 in a continuous and sealing manner; and
referring to FIGs. 20 and 21, disposing the second plate 2 on the side of the first plate 1 facing away from the frame 20, where the second plate 2 covers the frame 20, and referring to FIG. 22, connecting the circumferential edge of the second plate 2 to the frame 20 via at least two connecting members 30.

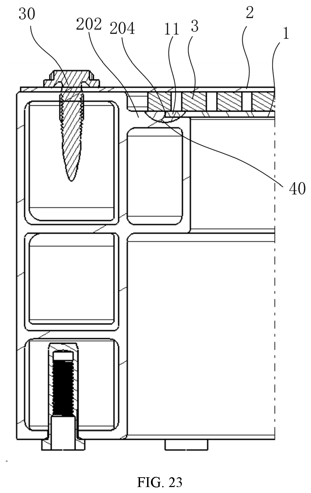

Referring to FIG. 23, which is a schematic diagram of the case after assembly, the circumferential edge of the first plate 1 is connected to the second extension portion 202 in a continuous and sealing manner, and the circumferential edge of the second plate 2 is connected to the frame 20 via at least two connecting members 30.

In the above embodiments, the first plate 1 of the end plate 10 is first connected to the frame 20 in a continuous and sealing manner, followed by the mounting of the second plate 2; and finally, the second plate 2 is integrally connected to the frame 20, thereby forming a case structure with fewer components and a simple construction. The dual-connection fastening method at the upper and lower portions provides a simple structure, thereby enabling convenient mounting, high assembly efficiency, low cost, and excellent reliability.

It should be noted that the weld seam 40 shown in FIGs. 13, 17, and 18 may be formed after the first plate 1 and the frame 20 are welded. The weld seam 40 is illustrated separately for clarity in illustrating the various components of the case.

Two embodiments of the end plate 10 and two assembly methods for a case are described below.

The first embodiment: Referring to FIGs. 6 to 8, the end plate 10 includes a first plate 1, an intermediate member 3, and a second plate 2 that are disposed in a stacked manner.

The projection of the first plate 1 in the first direction X covers and exceeds the projection of the intermediate member 3 in the first direction X. The projection of the second plate 2 in the first direction X covers and exceeds the projection of the first plate 1 in the first direction X. The first direction X is parallel to the direction from the first plate 1 to the second plate 2.

The first plate 1 is an aluminum plate. The thickness of the first plate 1 ranges from 1.5 mm to 2.5 mm.

The second plate 2 is a steel plate or an aluminum plate. The second plate 2 is a steel plate, and the thickness of the second plate 2 ranges from 0.5 mm to 1.5 mm. The second plate 2 is an aluminum plate, and the thickness of the second plate 2 ranges from 1 mm to 2 mm.

The intermediate member 3 is a honeycomb plate. The material of the intermediate member 3 may be plastic, such as polypropylene (PP), or aluminum, which is used to form a honeycomb plastic or a honeycomb aluminum plate. When the intermediate member 3 is a honeycomb aluminum plate, the first plate 1, the second plate 2, and the intermediate member 3 are integrated by aluminum alloy brazing to form an end plate 10 of a three-layer structure with excellent rigidity and high strength. When the intermediate member 3 is honeycomb plastic, PP adhesive films are attached to the upper surface and the lower surface of the honeycomb plate, and the first plate 1, the second plate 2, and the intermediate member 3 are integrated by hot pressing and hot melt processes to form an end plate 10 of a three-layer structure with excellent rigidity and high strength. The thickness H1 of the intermediate member 3 ranges from 5 mm to 10 mm. Referring to FIG. 9, the honeycomb structure includes a first honeycomb structure 33, and the first honeycomb structure 33 is a hexagonal honeycomb structure. Referring to FIG. 10, the honeycomb structure further includes a second honeycomb structure 34, and the second honeycomb structure 34 is a circular honeycomb structure.

Referring to FIG. 8, the projection of the second plate 2 in the first direction X covers and exceeds the projection of the first plate 1 in the first direction X, and the dimension L1, by which the second plate 2 exceeds the first plate 1, ranges from 10 mm to 50 mm.

The first assembly method for a case, that is, the assembly method for the end plate 10 and the frame 20 in the first embodiment, is as follows:
referring to FIG. 13, preparing an end plate 10 and a frame 20, where the end plate 10 includes a first plate 1, an intermediate member 3, and a second plate 2 that are disposed in a stacked manner;
referring to FIGs. 3 and 14, placing the frame 20 on the side of the second plate 2 adjacent to the first plate 1, where the frame 20 is disposed around the circumferential outer edge of the first plate 1, and the first extension portion 201 on the frame 20 extends between the first plate 1 and the second plate 2, and abuts against the intermediate member 3; connecting the circumferential edge of the first plate 1 to the first extension portion 201 in a continuous and sealing manner by friction stir welding (FSW); and
referring to FIG. 15, connecting the circumferential edge of the second plate 2 to the frame 20 via at least two hot-melt self-tapping screws (FDSs).

Referring to FIG. 16, which is a schematic diagram of the case after assembly, the circumferential edge of the first plate 1 is connected to the first extension portion 201 in a continuous and sealing manner by friction stir welding (FSW), and the circumferential edge of the second plate 2 is connected to the frame 20 via at least two hot-melt self-tapping screws (FDSs).

In the first embodiment, the end plate 10 is first fabricated and then connected to the frame 20. The end plate 10 can serve as the bottom plate of the case, and the connection between the end plate 10 and the frame 20 includes an upper portion connection and a lower portion connection. For the upper portion of the end plate 10, the first plate is connected to the frame by FSW, and for the lower portion of the end plate 10, the second plate is connected to the frame via FDSs.

The FSW and FDS connection methods are used to integrally connect the end plate 10 and the frame 20, thereby forming a case structure with fewer components and a simple construction. In addition, the dual-connection fastening method at the upper and lower portions provides a simple structure, thereby enabling convenient mounting, high assembly efficiency, low cost, and excellent reliability, and can be widely promoted and used, offering significant market value.

The FSW weld seam in the first embodiment is located at the bottom of the inner cavity of the case, that is, the end plate 10 and the frame 20 are welded from the interior of the cavity enclosed by the frame 20. Since the weld seam is proximal to the circumferential sidewall of the frame 20, when the cavity enclosed by the frame 20 is relatively deep, space is limited, and friction stir welding cannot be performed or a dedicated friction stir welding head equipment is required to be customized. In this case, the end plate 10 provided in the following second embodiment and a second assembly method for a case may be used.

The second embodiment: Referring to FIGs. 6, 11, and 12, the end plate 10 includes a first plate 1, an intermediate member 3, and a second plate 2 that are disposed in a stacked manner.

The projection of the intermediate member 3 in the first direction X covers and exceeds the projection of the first plate 1 in the first direction X. The projection of the second plate 2 in the first direction X covers and exceeds the projection of the intermediate member 3 in the first direction X. The first direction X is parallel to the direction from the first plate 1 to the second plate 2.

The first plate 1 is an aluminum plate. The thickness of the first plate 1 ranges from 1.5 mm to 2.5 mm.

The second plate 2 is a steel plate or an aluminum plate. The second plate 2 is a steel plate, and the thickness of the second plate 2 ranges from 0.5 mm to 1.5 mm. The second plate 2 is an aluminum plate, and the thickness of the second plate 2 ranges from 1 mm to 2 mm.

The intermediate member 3 is a honeycomb plate. The material of the intermediate member 3 may be plastic, such as polypropylene (PP), or aluminum, which is used to form a honeycomb plastic or a honeycomb aluminum plate. When the intermediate member 3 is a honeycomb aluminum plate, the first plate 1, the second plate 2, and the intermediate member 3 are integrated by aluminum alloy brazing to form an end plate 10 of a three-layer structure with excellent rigidity and high strength. When the intermediate member 3 is honeycomb plastic, PP adhesive films are attached to the upper surface and the lower surface of the honeycomb plate, and the first plate 1, the second plate 2, and the intermediate member 3 are integrated by hot pressing and hot melt processes to form an end plate 10 of a three-layer structure with excellent rigidity and high strength. The thickness H2 of the intermediate member 3 ranges from 5 mm to 10 mm. Referring to FIG. 9, the honeycomb structure includes a first honeycomb structure 33, and the first honeycomb structure 33 is a hexagonal honeycomb structure. Referring to FIG. 10, the honeycomb structure further includes a second honeycomb structure 34, and the second honeycomb structure 34 is a circular honeycomb structure.

Referring to FIG. 12, the projection of the second plate 2 in the first direction X covers and exceeds the projection of the first plate 1 in the first direction X, and the dimension L2, by which the second plate 2 exceeds the first plate 1, ranges from 25 mm to 60 mm.

The second assembly method for a case, that is, the assembly method for the end plate 10 and the frame 20 in the second embodiment, is as follows:

Referring to FIG. 18, the frame 20 is placed and the end portion of the frame 20 is allowed to be positioned above a cavity enclosed by the frame 20.

Referring to FIG. 19, the first plate 1 and the frame 20 form, by using FSW, a case half-assembly that includes only the first plate 1 of the end plate 10. Specifically, the first plate 1 is placed into the end portion of the frame 20, and is supported by the second extension portion 202 on the frame 20, and the circumferential edge of the first plate 1 is connected to the second extension portion 202 in a continuous and sealing manner by friction stir welding (FSW).

Referring to FIGs. 20 and 21, the first plate 1, the intermediate member 3, and the second plate 2 of the case half-assembly are formed by hot pressing. Specifically, the intermediate member 3 is placed on the side of the first plate 1 facing away from the frame 20, the second plate 2 is placed on the side of the intermediate member 3 facing away from the first plate 1, and the second plate 2 covers the frame 20. The first plate 1, the intermediate member 3, and the second plate 2 are then formed by hot pressing.

Referring to FIG. 22, the second plate 2 is rigidly connected to the frame 20 by FDSs. Specifically, the circumferential edge of the second plate 2 is connected to the frame 20 via at least two hot-melt self-tapping screws (FDSs).

Referring to FIG. 23, which is a schematic diagram of the case after assembly, the circumferential edge of the first plate 1 is connected to the second extension portion 202 in a continuous and sealing manner by friction stir welding (FSW), and the circumferential edge of the second plate 2 is connected to the frame 20 via at least two hot-melt self-tapping screws (FDSs).

In the second embodiment, the first plate 1 of the end plate 10 is first connected to the frame 20 by FSW, then the intermediate member 3 is embedded, and finally the second plate 2 is assembled. The first plate 1, the intermediate member 3, and the second plate 2 are integrated by hot pressing and hot melt processes to form an end plate 10 of a three-layer structure with excellent rigidity and high strength. Then, the FDS connection method is used to integrally connect the second plate 2 and the frame 20, thereby forming a case structure with fewer components and a simple construction. In conclusion, this case structure, with fewer components and a dual-connection fastening method at the upper and lower portions, offers a simple structure, thereby enabling convenient mounting, high assembly efficiency, low cost, and excellent reliability. It can be widely promoted and used, offering significant market value.

Referring to FIG. 3, which is the first embodiment of the case, the case includes the end plate 10 provided in the first embodiment, and is formed by using the first assembly method for a case.

Referring to FIG. 4, which is the second embodiment of the case, the case includes the end plate 10 provided in the second embodiment, and is formed by using the second assembly method for a case.

Referring to FIG. 5, which is the third embodiment of the case, the end plate 10 included in the case is different from the intermediate member 3 of the end plate 10 provided in the second embodiment, and other structures are the same. The case is formed by using the second assembly method for a case.

Although the present application has been described with reference to preferred embodiments, various modifications can be made and components can be replaced with equivalents without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A case, comprising:
frames (20); and
an end plate (10) connected to the frames (20), wherein the end plate (10) comprises a first connecting portion (11) and a second connecting portion (21) both facing the frame (20); a circumferential edge of the first connecting portion (11) and a circumferential edge of the second connecting portion (21) are both connected to the frame (20); an entire circumferential edge of at least one of the first connecting portion (11) and the second connecting portion (21) is connected to the frame (20) in a continuous and sealing manner.

2. The case according to claim 1, wherein the first connecting portion (11) and the second connecting portion (21) are not on the same plane.

3. The case according to claim 1 or 2, wherein the first connecting portion (11) is positioned closer to an internal space of the case than the second connecting portion (21).

4. The case according to any one of claims 1 to 3, wherein the entire circumferential edge of the first connecting portion (11) is connected to the frame (20) in a continuous and sealing manner, and the circumferential edge of the second connecting portion (21) is connected to the frame (20) via at least two connecting members (30).

5. The case according to any one of claims 1 to 4, wherein the entire circumferential edge of at least one of the first connecting portion (11) and the second connecting portion (21) is connected to the frame (20) in a continuous and sealing manner by friction stir welding.

6. The case according to any one of claims 1 to 5, wherein the entire circumferential edge of one of the first connecting portion (11) and the second connecting portion (21) is connected to the frame (20) in a continuous and sealing manner, and the circumferential edge of the other connecting portion is connected to the frame (20) via at least two connecting members (30).

7. The case according to claim 4 or 6, wherein the connecting member (30) comprises a hot-melt self-tapping screw.

8. The case according to any one of claims 1 to 7, wherein the end plate (10) comprises a first plate (1) and a second plate (2) stacked in a first direction (X); the first connecting portion (11) is disposed on the first plate (1), and the second connecting portion (21) is disposed on the second plate (2).

9. The case according to claim 8, wherein the end plate (10) further comprises an intermediate member (3) disposed between the first plate (1) and the second plate (2), and the intermediate member (3) connects the first plate (1) and the second plate (2), such that a spacing is formed between the first plate (1) and the second plate (2).

10. The case according to claim 9, wherein the intermediate member (3) is configured as a honeycomb structure.

11. The case according to claim 9 or 10, wherein the intermediate member (3) forms at least one flow channel (4) between the first plate (1) and the second plate (2), and an extending direction of the flow channel (4) intersects the first direction (X).

12. The case according to claim 9, wherein the intermediate member (3) comprises a first component (31) and a second component (32), the first component (31) is configured as a honeycomb structure, and the second component (32) forms at least one flow channel (4) between the first component (31) and the first plate (1) or the second plate (2); an extending direction of the flow channel (4) intersects the first direction (X).

13. The case according to any one of claims 8 to 12, wherein a projection range of the second connecting portion (21) in the first direction (X) covers and exceeds a projection range of the first connecting portion (11) in the first direction (X); the frame (20) is disposed on a side of the second plate (2) adjacent to the first plate (1), and the frame (20) is disposed around a circumferential outer edge of the first plate (1).

14. The case according to claim 13, wherein a projection range of the first connecting portion (11) in the first direction (X) covers and exceeds a projection range of the intermediate member (3) in the first direction (X); the frame (20) comprises a first extension portion (201) extending between the first plate (1) and the second plate (2), and the first extension portion (201) is connected to the first connecting portion (11) in a continuous and sealing manner.

15. The case according to claim 14, wherein a side of the first extension portion (201) facing away from the second plate (2) is connected to the first connecting portion (11) in a continuous and sealing manner.

16. The case according to claim 14 or 15, wherein the frame (20) further comprises a first limiting portion (203), the first limiting portion (203) is disposed on the side of the first extension portion (201) facing away from the second plate (2), and the first limiting portion (203) abuts against the circumferential outer edge of the first plate (1).

17. The case according to claim 16, wherein a side of the first limiting portion (203) facing away from the second plate (2) is flush with a side of the first plate (1) facing away from the second plate (2).

18. The case according to claim 13, wherein a projection range of the intermediate member (3) in the first direction (X) covers and exceeds the projection range of the first connecting portion (11) in the first direction (X); the frame (20) comprises a second extension portion (202), the second extension portion (202) is disposed on a side of the first plate (1) facing away from the second plate (2), and the second extension portion (202) is connected to the first connecting portion (11) in a continuous and sealing manner.

19. The case according to claim 18, wherein a side of the second extension portion (202) adjacent to the second plate (2) is connected to the first connecting portion (11) in a continuous and sealing manner.

20. The case according to claim 18 or 19, wherein the frame (20) further comprises a second limiting portion (204), the second limiting portion (204) is disposed on a side of the second extension portion (202) adjacent to the second plate (2), and the second limiting portion (204) abuts against a circumferential outer edge of the first plate (1).

21. The case according to claim 20, wherein the side of the second limiting portion (204) adjacent to the second plate (2) is flush with a side of the first plate (1) adjacent to the second plate (2).

22. A battery, comprising the case according to any one of claims 1 to 21.

23. An electric device, comprising the battery according to claim 22.

24. An assembly method for a case, comprising the following steps:
providing frames (20); and
providing an end plate (10), wherein the end plate (10) comprises a first connecting portion (11) and a second connecting portion (21) both facing the frame (20); and
connecting both a circumferential edge of the first connecting portion (11) and a circumferential edge of the second connecting portion (21) to the frame (20), wherein an entire circumferential edge of at least one of the first connecting portion (11) and the second connecting portion (21) is connected to the frame (20) in a continuous and sealing manner.

25. The assembly method according to claim 24, wherein the first connecting portion (11) is positioned closer to an internal space of the case than the second connecting portion (21);
connecting the entire circumferential edge of at least one of the first connecting portion (11) and the second connecting portion (21) to the frame (20) in a continuous and sealing manner comprises: connecting the entire circumferential edge of the first connecting portion (11) to the frame (20) in a continuous and sealing manner, and connecting the circumferential edge of the second connecting portion (21) to the frame (20) via at least two connecting members (30).

26. The assembly method for a case according to claim 24 or 25, wherein the end plate (10) comprises a first plate (1) and a second plate (2) stacked in a first direction (X); the first connecting portion (11) is disposed on the first plate (1), and the second connecting portion (21) is disposed on the second plate (2);
prior to connecting both the circumferential edge of the first connecting portion (11) and the circumferential edge of the second connecting portion (21) to the frame (20), the assembly method further comprises:
placing the frame (20) on a side of the second plate (2) adjacent to the first plate (1), wherein the frame (20) is disposed around a circumferential outer edge of the first plate (1), and a first extension portion (201) on the frame (20) extends between the first plate (1) and the second plate (2);
connecting the entire circumferential edge of at least one of the first connecting portion (11) and the second connecting portion (21) to the frame (20) in a continuous and sealing manner comprises:
connecting the entire circumferential edge of the first connecting portion (11) to the first extension portion (201) in a continuous and sealing manner; and
connecting the circumferential edge of the second connecting portion (21) to the frame (20) via at least two connecting members (30).

27. The assembly method for a case according to claim 24, wherein the end plate (10) comprises a first plate (1) and a second plate (2) stacked in a first direction (X); the first connecting portion (11) is disposed on the first plate (1), and the second connecting portion (121) is disposed on the second plate (2);
providing the frame (20) comprises: placing the frame (20) and allowing an end portion of the frame (20) to be connected to the end plate (10) to be positioned above a cavity enclosed by the frame (20);
connecting the entire circumferential edge of at least one of the first connecting portion (11) and the second connecting portion (21) to the frame (20) in a continuous and sealing manner comprises: placing the first plate (1) into an end portion of the frame (20) and supporting the first plate by a second extension portion (202) on the frame (20); and connecting the entire circumferential edge of the first connecting portion (11) to the second extension portion (202) in a continuous and sealing manner; and
disposing the second plate (2) on a side of the first plate (1) facing away from the frame (20), wherein the second plate (2) covers the frame (20), and connecting the circumferential edge of the second connecting portion (21) to the frame (20) via at least two connecting members (30).
